# EUROPÄISCHE PATENTSCHRIFT

(11) **EP 0 872 282 B1**
(45) Veröffentlichungstag und Bekanntmachung des Hinweises auf die Patenterteilung: **27.02.2002**
(21) Anmeldenummer: 98105704.5
(22) Anmeldetag: 28.03.1998
(51) Int. Cl.: B04B 11/04

(54) **Filterzentrifuge**
Filter centrifuge
Centrifugeuse filtrante

(30) Priorität: 17.04.1997 DE 19716129
(43) Veröffentlichungstag der Anmeldung: 21.10.1998
(73) Patentinhaber: Krauss-Maffei Process Technology AG, 80997 München (DE)
(72) Erfinder: Dommer, Erich, 91242 Ottensoos (DE); Feller, Johannes, 83104 Tuntenhausen (DE); Grim, Gunnar, 80997 München (DE); Hegnauer, Bruno, 82131 Gauting (DE)
(74) Vertreter: Merkau, Bernhard

(56) Entgegenhaltungen:
- EP-A- 0 679 722
- US-A- 4 405 454

## Beschreibung

Die Erfindung betrifft eine Vorrichtung zur Messung der Füllstandshöhe in einer Zentrifugentrommel gemäß dem Oberbegriff des Patentanspruchs 1.

Bei der Trennung von Suspension in einen Feststoffanteil und in einen Flüssigkeitsanteil mittels einer diskontinuierlich arbeitenden Filterzentrifuge ist es für einen wirtschaftlichen Betrieb der Zentrifuge erforderlich, daß die Füllstandshöhe ständig überwacht wird, um bei den ständig wechselnden Verfahrensschritten, wie Suspensionszufuhr, Filtration, Zugabe von Waschflüssigkeit und Nachfüllen von Suspension, in der Lage zu sein, das vorhandene Füllvolumen der Zentrifuge optimal zu nutzen und ineffektive Betriebsintervalle der Zentrifuge zu vermeiden.

Zur Messung der Füllstandshöhe von Zentrifugen der beschriebenen Art ist es wie aus EP-A-679 722 bekannt, im Verfahrensraum innerhalb der Zentrifugentrommel Ultraschallsensoren anzuordnen, deren Sender senkrecht auf die innere Oberfläche des Füllungsinhalts der Zentrifugentrommel strahlt. Durch Messung der Echolaufzeit wird der Abstand zwischen Ultraschallsensor und Füllungsoberfläche ermittelt und danach die Füllstandshöhe bestimmt. Aufgrund der Anordnung des Ultraschallsensors im Inneren der Zentrifugentrommel entstehen jedoch Toträume, die insbesondere bei im Sterilbereich einzusetzenden Zentrifugen zu Problemen führen können. Im weiteren sind systembedingt Mindestabstände zwischen Ultraschallsensor und Füllungsoberfläche einzuhalten. So ist bei hochfrequenten Ultraschallsensoren ein Mindestabstand von 100mm einzuhalten, wobei derartige Sensoren aber in explosionsgefährdeten Bereichen nicht eingesetzt werden dürfen. Tieffrequente Ultraschallsensoren, die in explosionsgefährdeten Bereichen eingesetzt werden können, erfordern jedoch einen Mindestabstand von 300mm. Im weiteren können durch Einbauten im Inneren des Zentrifugenraumes, wie sie beispielsweise bei Stülpfilterzentrifugen mit den Abstandsbolzen zwischen Trommeldeckel und Schubboden gegeben sind, die Schallreflexionen zerstört werden.

Der Erfindung liegt daher die Aufgabe zugrunde, bei Ultraschallmeßvorrichtungen der genannten Art deren Anwendbarkeit bei der Ermittlung der Füllstandshöhe in Zentrifugentrommeln zu verbessern, im besonderen sollen Toträume vermieden werden, Mindestabstände zwischen Ultraschallsensor und Füllungsoberfläche auch bei kleinen Trommeldurchmessern geschaffen werden. Im weiteren sollen Störeinflüsse von mit der Zentrifugentrommel mitrotierenden Zentrifugenbauteilen vermieden oder weitgehend reduziert werden.

Die Lösung dieser Aufgabe erfolgt durch die im Patentanspruch 1 angegebenen Merkmale; die Unteransprüche betreffen vorteilhafte Ausgestaltungen der Erfindung.

Durch die Umlenkung über eine im Inneren der Zentrifugentrommel angeordnete Reflexionsfläche ist das Problem des bei Ultraschallsensoren einzuhaltenden Mindestabstandes gelöst. Nach der Erfindung zählt als Abstand die Summe der Abstände zwischen Füllungsoberfläche und Reflexionsfläche einerseits und zwischen Reflexionsfläche und Ultraschallsensor andererseits.

Ausführungsbeispiele der Erfindung werden nachstehend anhand einer Zeichnung näher beschrieben. Es zeigen in schematischer Darstellungsweise:
- Fig. 1: den Schnitt durch eine Filterzentrifuge,
- Fig. 2: einen Teilausschnitt der Filterzentrifuge nach Fig. 1 mit ei nem geraden Reflexionskonus,
- Fig. 3: einen Teilausschnitt nach Fig. 2 jedoch mit einem konkaven Reflexionskonus,
- Fig. 4: einen Schnitt durch die Filtertrommel einer Stülpfilterzentrifuge,
- Fig. 5: einen Teilausschnitt durch eine Filtertrommel mit einer ebenen Reflexionsfläche,
- Fig. 6: die perspektivische Ansicht der Filtertrommel nach Fig. 5,
- Fig. 7: den Schnitt durch eine Filtertrommel mit der Mantelfläche eines Kegelstumpfes als Reflexionsfläche und
- Fig. 8: eine Filterzentrifuge mit einer Hohlwelle durch deren Hohlkanal die Ultraschallimpulse von außen in den Innenraum der Zentrifugentrommel gesendet werden.

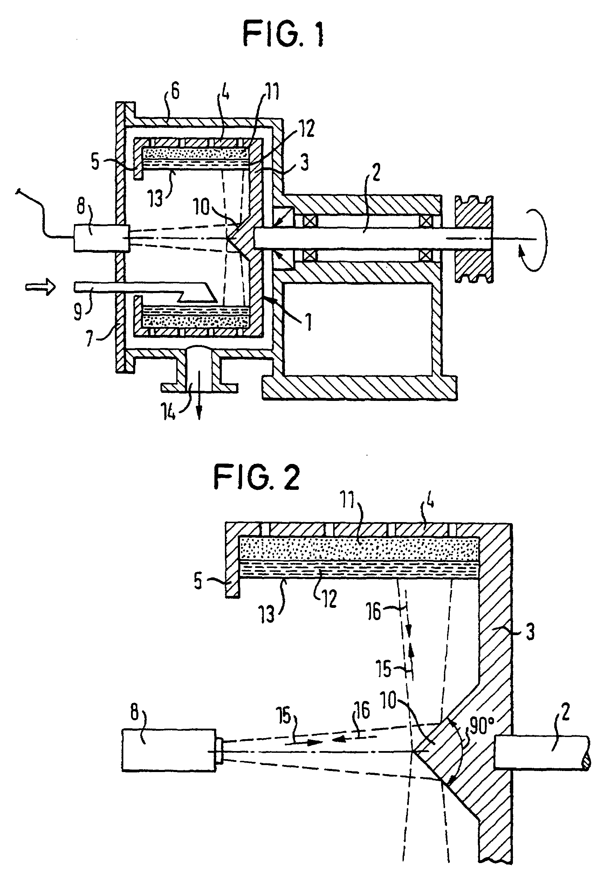

Die Fig. 1 und 2 zeigen eine Filterzentrifuge mit einer Filtertrommel 1, die sich aus Trommelwelle 2, Trommelboden 3, Siebmantel 4 und Trommelrand 5 zusammensetzt. Die Trommelwelle 2 ist in einem die Filtertrommel 1 umschließenden Zentrifugengehäuse 6 gelagert. In dem Gehäusedeckel 7 sind ein Ultraschallsensor 8 und ein in das Innere der Filtertrommel 1 ragendes Suspensionsfüllrohr 9 angeordnet. Auf der Innenseite des Trommelbodens 3 ist ein Reflexionskonus 10 angeordnet. Die Filtertrommel 1 ist mit einer Suspension gefüllt, deren Feststoffbestandteile sich in einer Feststoffschicht bzw. in einem Feststoffkuchen 11 abgesetzt haben, über der sich die aus Filtrat bestehende Flüssigkeitsschicht 12 mit der Füllungsoberfläche 13 befindet. Das Filtrat durchdringt im Betrieb der Filterzentrifuge den Feststoffkuchen 11 und wird über den Siebmantel 4 abgeschleudert und über die Ablauföffnung 14 des Zentrifugengehäuses 6 abgeleitet. Die Feststoffe des verbleibenden Feststoffkuchens 11 können durch eine Schälvorrichtung (nicht dargestellt) ausgetragen werden.

Die Fig. 2 zeigt das vom Ultraschallsensor 8 abgestrahlte Schallsignal 15 (Pfeil mit durchgehender Linie), das am Reflexionskonus 10 um 90° abgelenkt wird. An der Füllungsoberfläche 13 wird das Schallsignal 15 reflektiert und gelangt als Echosignal 16 (Pfeil mit unterbrochener Linie) zum Ultraschallsensor 8 zurück, wo es von dessen Empfängereinheit registriert wird. Aus der Echolaufzeit von Schallsignal 15 und Echosignal 16 wird der Abstand zwischen Ultraschallsensor 8 und Füllungsoberfläche ermittelt und danach die Dicke der Füllungsschicht bestimmt.

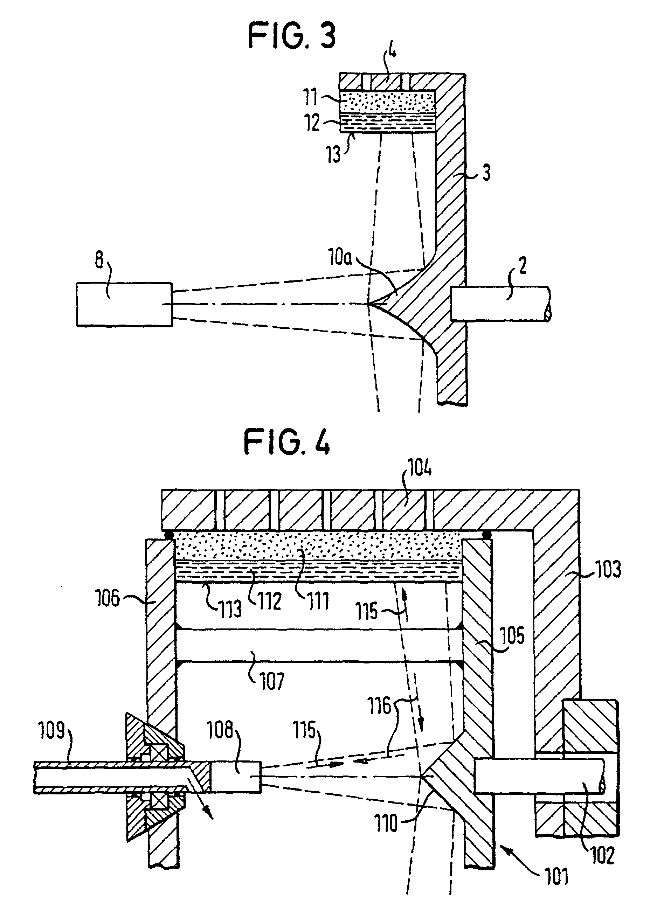

Die Fig. 3 zeigt eine Variante des Reflexionskonuses 10a mit konkav ausgebildeter Mantelfläche. Damit erfahren die vom Ultraschallsensor 8 ausgesendeten Schallsignale 15 und die von der Füllungsoberfläche 13 reflektierten Echosignale 16 eine Bündelung, wodurch in der Empfängereinheit des Ultraschallsensors 8 ein stärkeres Echosignal 16 empfangen werden kann.

Die Fig. 4 zeigt in Teildarstellung die Filtertrommel 101 einer Stülpfilterzentrifuge, die sich aus Trommelwelle 102, Trommelboden 103, Siebmantel 104, Schubboden 105, Verschlußdeckel 106 und Abstandsbolzen 107 zusammensetzt. Durch den Verschlußdeckel 106 ragt drehfest ein Suspensionsfüllrohr 109 an dessen in das Innere der Filtertrommel 1 ragendem Ende der Ultraschallsensor 108 angeordnet ist. Das vom Ultraschallsensor 108 ausgesendete Schallsignal 115 wird in gleicher Weise wie bei der Ausführung nach Fig. 1 und 2 radial aufgefächert, was bei der Stülpfilterzentrifuge in der mit Trommelumfangsgeschwindigkeit rotierenden und in der Zentrifugentrommel eingeschlossenen Luftsäule erfolgt. Das Schallsignal wird an den Abstandsbolzen 107 nicht zerstört, sondern erfährt nur eine geringfügige Schwächung. Ca. 90 % des Schallsignals 115 treten ungehindert zwischen den Abstandsbolzen 107 hindurch und erzeugten ein zur Auswertung der Echolaufzeit ausreichend starkes Echosignal 116.

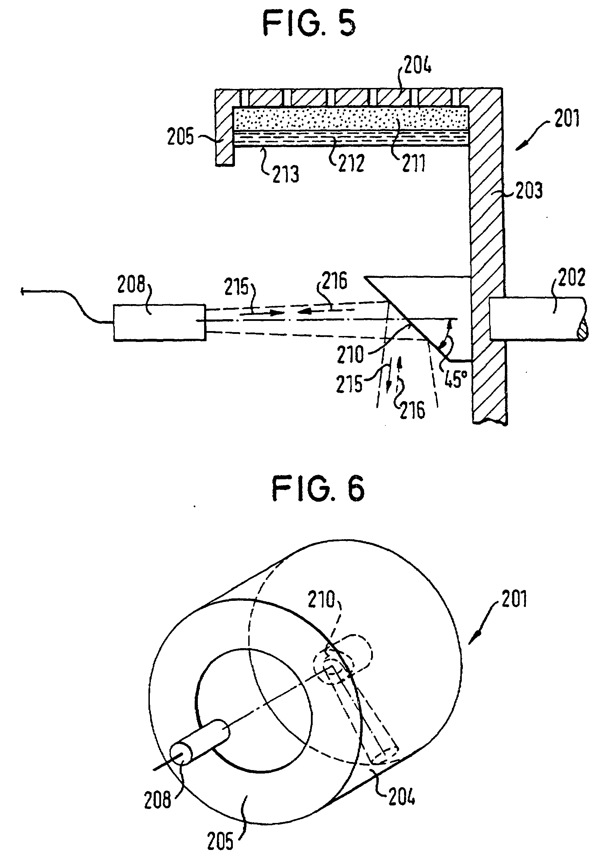

Die Fig. 5 und 6 zeigen in Teildarstellung eine Filtertrommel 201, die sich aus Trommelwelle 202, Trommelboden 203, Siebmantel 204 und Trommelrand 205 zusammensetzt. Auf der Innenseite des Trommelbodens 203 ist in dessen Zentrum eine ebene Reflexionsplatte 210 angeordnet, die zur Rotationsachse der Filtertrommel 201 einen Winkel von 45° einschließt. Wie aus Fig. 6 zu ersehen, läuft das vom Ultraschallsensor 208 ausgesendete Schallsignal 215 und das von der Füllungsoberfläche reflektierte Echosignal 216 mit der Filtertrommel 201 um, d.h. es wird nur eine bestimmte Fläche der Füllungsoberfläche 213 mit dem Schallsignal 215 beaufschlagt, wodurch sich diese Ausführungsart besonders für Zentrifugen eignet, die in der Zentrifugentrommel 201 mitrotierende Bauteile aufweisen.

Die Reflexionsplatte kann auch konkav (nicht dargestellt) ausgebildet sein, wodurch sich eine Bündelung von Schall- und Echosignal 215, 216 erzielen läßt.

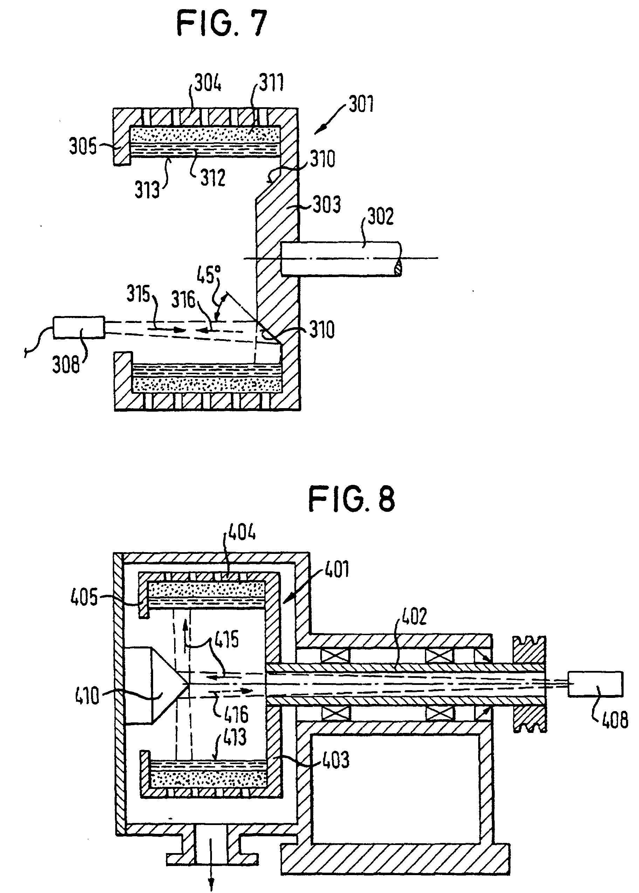

Die Fig. 7 zeigt eine Filtertrommel 301, die sich aus Trommelwelle 302, Trommelboden 303, Siebmantel 304 und Trommelrand 305 zusammensetzt. Auf der Innenseite des Trommelbodens 303 ist in dessen Zentrum eine Reflexionsfläche 310 in Form der Mantelfläche eines Kegelstumpfes angeordnet, die zur Rotationsachse der Filtertrommel 301 einen Winkel von 45° einschließt. Im Gegensatz zu den Ausführungsformen nach den Fig. 1 bis 6 ist der Ultraschallsensor 308 jedoch nicht fluchtend zur Rotationsachse der Filtertrommel 301 angeordnet, sondern hierzu in einem Parallelabstand, so daß das Schallsignal 315 auf die Reflexionsfläche 310 trifft und dort um 90° auf die Füllungsoberfläche 313 umgelenkt wird. Das Schallsignal 315 trifft dabei in bezug auf das Zentrifugengehäuse (nicht dargestellt) stets an einer Stelle auf die Füllungsoberfläche 313.

Die Fig. 8 zeigt eine Filtertrommel 401, die sich aus Trommelwelle 402, Trommelboden 403, Siebmantel 404 und Trommelrand 405 zusammensetzt. Die Trommelwelle 402 ist als Hohlwelle ausgebildet, durch deren Hohlkanal das vom Ultraschallsensor 408 ausgesendete Schallsignal 415 verläuft. Dieses wird an einer fluchtend zur Rotationsachse der Filtertrommel 401 an der Gehäusewand der Zentrifuge angeordneten Reflexionsfläche 410 um 90° zur Füllungsoberfläche 413 umgelenkt und gelangt von dort als Echosignal 416 zurück zum Empfängerteil des stationär außerhalb der Zentrifuge befindlichen Ultraschallsensors 408.

Anstelle der Anordnung der Reflexionsfläche an der dem Hohlkanal gegenüberliegenden Gehäusewand kann die Reflexionsfläche an einer dem Hohlkanal gegenüberliegenden Trommelwandung (nicht dargestellt) angeordnet sein. Diese Ausgestaltung kann für Zentrifugentypen vorteilhaft sein, bei denen in bestimmten Betriebsphasen, wie z.B. bei einer Stülpfilterzentrifuge, der Innenraum der Zentrifugentrommel vollkommen umschlossen ist.

Die Anordnung einer Hohlwelle kann für Fälle vorteilhaft sein, bei denen nur eine gelegentliche Überprüfung der Füllhöhengegebenheiten innerhalb Zentrifugentrommel notwendig ist, wie z.B. zur Einstellung der Zentrifugensteuerung für ein bestimmtes Produkt. Der Ultraschallsensor 408 wird dabei nur bedarfsweise eingesetzt, wobei, je nach Bauart, der Ultraschallimpuls und das Ultraschallecho an einer gehäusefesten oder an einer trommelfesten Reflexionsfläche umgelenkt werden.

## Patentansprüche

1. Vorrichtung zur Messung der Füllstandshöhe in einer Zentrifugentrommel mittels eines Ultraschallsensors, dessen Ultraschallimpulse im wesentlichen senkrecht auf die Füllungsoberfläche der Zentrifugentrommel gerichtet sind, wobei über den aus der Echolaufzeit des Ultraschallimpulses ermittelbaren Abstand des Ultraschallsensors von der Füllungsoberfläche die Füllstandshöhe bestimmbar ist, **dadurch gekennzeichnet, daß** der Ultraschallimpuls über eine im Inneren der Zentrifugentrommel (1,101,201,301,401) angeordnete Reflexionsfläche (10,10a,110,210,310, 410) auf die Füllungsoberfläche (13,113,213,313,413) gerichtet wird.

2. Vorrichtung nach Anspruch 1, **dadurch gekennzeichnet, daß** die Reflexionsfläche (10,10a) aus einem Reflexionskonus besteht, der am Trommelboden (3) der Zentrifugentrommel (1) angeordnet ist, wobei die Achse des Reflexionskonuses und die Strahlungsachse des Ultraschallsensors (8) mit der Rotationsachse der Zentrifugentrommel (1) fluchten.

3. Vorrichtung nach Anspruch 2, **dadurch gekennzeichnet, daß** der Reflexionskonus (10) einen Konuswinkel von 90° einschließt.

4. Vorrichtung nach Anspruch 2, **dadurch gekennzeichnet, daß** die Mantelfläche des Reflexionskonuses (10a) konkav ausgebildet ist.

5. Vorrichtung nach Anspruch 1, **dadurch gekennzeichnet, daß** die Reflexionsfläche (310) die Mantelfläche eines Kegelstumpfes ist, der am Trommelboden (303) der Zentrifugentrommel (301) angeordnet ist, wobei die Achse des Kegelstumpfes mit der Rotationsachse der Zentrifugentrommel (301) fluchtet und die Strahlungsachse des Ultraschallsensors (308) im Parallelversatz zur Rotationsachse auf die Mantelfläche gerichtet ist.

6. Vorrichtung nach Anspruch 5, **dadurch gekennzeichnet, daß** die Mantelfläche des Kegelstumpfes einen Kegelwinkel von 90° einschließt.

7. Vorrichtung nach Anspruch 5, **dadurch gekennzeichnet, daß** die Mantelfläche des Kegelstumpfes konkav ausgebildet ist.

8. Vorrichtung nach Anspruch 1, **dadurch gekennzeichnet, daß** die Reflexionsfläche aus einer ebenen Reflexionsplatte (210) besteht, die im Zentrum des Trommelbodens (203) der Zentrifugentrommel (201) angeordnet ist und mit der Rotationsachse der Zentrifugentrommel (201) einen Winkel von 45° einschließt, wobei die Strahlungsachse des Ultraschallsensors (208) mit der Rotationsachse fluchtet.

9. Vorrichtung nach Anspruch 8, **dadurch gekennzeichnet, daß** die Reflexionsfläche aus einer konkaven Reflexionsplatte (210) besteht.

10. Vorrichtung nach einem der Ansprüche 1 bis 9, **dadurch gekennzeichnet, daß** der Ultraschallsensor (8,208,308) in der dem Trommelboden (3,203,303) der Zentrifugentrommel (1,201,301) gegenüberliegenden Wandung des Zentrifugengehäuses angeordnet ist.

11. Vorrichtung nach Anspruch 10, **dadurch gekennzeichnet, daß** der Ultraschallsensor in der Gehäusetür des Zentrifugengehäuses angeordnet ist.

12. Vorrichtung nach einem der Ansprüche 1 bis 9, **dadurch gekennzeichnet, daß** bei einer Zentrifuge mit allseits umschlossenen Zentrifugeninnenraum der Ultraschallsensor (108) an dem drehfest in den Zentrifugeninnenraum ragenden Ende des Füllrohres (109) angeordnet ist.

13. Vorrichtung nach Anspruch 1, **dadurch gekennzeichnet, daß** die Welle der Zentrifugentrommel (401) eine Hohlwelle (402) ist, durch deren Hohlkanal der Ultraschallimpuls von dem außerhalb der Hohlwelle (402) stationär angeordneten Ultraschallsensor (408) in die im Inneren der Zentrifugentrommel (401) angeordnete Reflexionsfläche gerichtet ist.

14. Vorrichtung nach Anspruch 13, **dadurch gekennzeichnet, daß** die Reflexionsfläche auf der der Hohlwelle gegenüberliegenden Wandung der Zentrifugentrommel (401) angeordnet ist.

15. Vorrichtung nach Anspruch 13, **dadurch gekennzeichnet, daß** die Reflexionsfläche (410) auf der der Hohlwelle gegenüberliegenden Wandung des Zentrifugengehäuses angeordnet ist.

## Claims

1. Device for measuring the filling level in a centrifuge drum by means of an ultrasonic sensor, the ultrasonic pulses of which are directed substantially perpendicularly onto the filling surface of the centrifuge drum, wherein the filling level can be determined via the distance of the ultrasonic sensor from the filling surface, which distance can be ascertained from the echo propagation time of the ultrasonic pulse, **characterised in that** the ultrasonic pulse is directed via a reflecting face (10, 10a, 110, 210, 310, 410) arranged in the interior of the centrifuge drum (1, 101, 201, 301, 401) onto the filling surface (13, 113, 213, 313, 413).

2. Device according to claim 1, **characterised in that** the reflecting face (10, 10a) consists of a reflecting cone arranged at the drum base (3) of the centrifuge drum (1), the axis of the reflecting cone and the axis of radiation of the ultrasonic sensor (8) being aligned with the axis of rotation of the centrifuge drum (1).

3. Device according to claim 2, **characterised in that** the reflecting cone (10) encloses a conical angle of 90°.

4. Device according to claim 2, **characterised in that** the external surface of the reflecting cone (10a) is concave in design.

5. Device according to claim 1, **characterised in that** the reflecting face (310) is the external surface of a truncated cone arranged on the drum base (303) of the centrifuge drum (301), the axis of the truncated cone being aligned with the axis of rotation of the centrifuge drum (301) and the axis of radiation of the ultrasonic sensor (308) is directed onto the external surface in parallel offset to the axis of radiation.

6. Device according to claim 5, **characterised in that** the external surface of the truncated cone encloses a conical angle of 90°.

7. Device according to claim 5, **characterised in that** the external surface of the truncated cone is concave in design.

8. Device according to claim 1, **characterised in that** the reflecting face consists of a plane reflecting plate (210) arranged in the centre of the drum base (203) of the centrifuge drum (201) and encloses an angle of 45° with the axis of rotation of the centrifuge drum (201), the axis of radiation of the ultrasonic sensor (208) being aligned with the axis of rotation.

9. Device according to claim 8, **characterised in that** the reflecting face consists of a concave reflecting plate (210).

10. Device according to any of claims 1 to 9, **characterised in that** the ultrasonic sensor (8, 208, 308) is arranged in the wall of the centrifuge housing opposing the drum base (3, 203, 303) of the centrifuge drum (1, 201, 301).

11. Device according to claim 10, **characterised in that** the ultrasonic sensor is arranged in the housing door of the centrifuge housing.

12. Device according to any of claims 1 to 9, **characterised in that** in a centrifuge with an interior enclosed on all sides the ultrasonic sensor (108) is arranged on the non-rotatable end of the filling pipe (109) projecting into the centrifuge interior.

13. Device according to claim 1, **characterised in that** the shaft of the centrifuge drum (201) is a hollow shaft (402) through the hollow duct of which the ultrasonic pulse is directed from the ultrasonic sensor (408) stationarily arranged outside the hollow shaft (402) into the reflecting face arranged in the interior of the centrifuge drum (401).

14. Device according to claim 13, **characterised in that** the reflecting face is arranged on the wall of the centrifuge drum (401) opposing the hollow shaft.

15. Device according to claim 13, **characterised in that** the reflecting face (410) is arranged on the wall of the centrifuge housing opposing the hollow shaft.

## Revendications

1. Dispositif de mesure de la hauteur du niveau dans le panier d'une centrifugeuse au moyen d'un capteur à ultrasons, dont les impulsions ultrasonores sont sensiblement perpendiculaires à la surface de remplissage du panier de la centrifugeuse, la hauteur du niveau pouvant être déterminée à partir de la distance entre le capteur à ultrasons et la surface de remplissage, calculée à partir de la durée de propagation de l'écho de l'impulsion ultrasonore, **caractérisé en ce que** l'impulsion ultrasonore est dirigée sur la surface de remplissage (13, 113, 213, 313, 413) par l'intermédiaire d'une surface de réflexion (10, 10a, 110, 210, 310, 410) disposée à l'intérieur du panier (1, 101, 201, 301, 401) de la centrifugeuse.

2. Dispositif selon la revendication 1, **caractérisé en ce que** la surface de réflexion (10, 10a) est formée par un cône de réflexion, qui est disposé sur le fond (3) du panier (1) de la centrifugeuse, l'axe du cône de réflexion et l'axe de rayonnement du capteur à ultrasons (8) étant alignés avec l'axe de rotation du panier (1) de la centrifugeuse.

3. Dispositif selon la revendication 2, **caractérisé en ce que** le cône de réflexion (10) forme un angle au sommet de 90°.

4. Dispositif selon la revendication 2, **caractérisé en ce que** la surface latérale du cône de réflexion (10a) est concave.

5. Dispositif selon la revendication 1, **caractérisé en ce que** la surface de réflexion (310) forme la surface latérale d'un cône tronqué, qui est disposé sur le fond (303) du panier (301) de la centrifugeuse, l'axe du cône tronqué étant aligné avec l'axe de rotation du panier (301) de la centrifugeuse et l'axe de rayonnement du capteur à ultrasons (308) étant dirigé sur la surface latérale avec un décalage parallèle à l'axe de rotation.

6. Dispositif selon la revendication 5, **caractérisé en ce que** la surface latérale du cône tronqué forme un angle du tronc de cône de 90°.

7. Dispositif selon la revendication 5, **caractérisé en ce que** la surface latérale du cône tronqué est concave.

8. Dispositif selon la revendication 1, **caractérisé en ce que** la surface de réflexion est formée par une plaque de réflexion (210) plane, qui est disposée au centre du fond (203) du panier (201) de la centrifugeuse et qui forme avec l'axe de rotation du panier (201) de la centrifugeuse un angle de 45°, l'axe de rayonnement du capteur à ultrasons (208) étant aligné avec l'axe de rotation.

9. Dispositif selon la revendication 8, **caractérisé en ce que** la surface de réflexion est formée par une plaque de réflexion (210) concave.

10. Dispositif selon l'une des revendications 1 à 9, **caractérisé en ce que** le capteur à ultrasons (8, 208, 308) est monté dans la paroi du carter de la centrifugeuse, en regard du fond (3, 203, 303) du panier (1, 201, 301) de la centrifugeuse.

11. Dispositif selon la revendication 10, **caractérisé en ce que** le capteur à ultrasons est monté dans la porte du carter de la centrifugeuse.

12. Dispositif selon l'une des revendications 1 à 9, **caractérisé en ce que**, dans une centrifugeuse avec un volume intérieur fermé de toutes parts, le capteur à ultrasons (108) est monté sur l'extrémité du tube de remplissage (109) qui s'engage de manière à ne pas tourner dans le volume intérieur de la centrifugeuse.

13. Dispositif selon la revendication 1, **caractérisé en ce que** l'arbre du panier (401) de la centrifugeuse est un arbre creux (402), à travers le canal duquel se propage l'impulsion ultrasonore émise par le capteur à ultrasons (408), monté de manière stationnaire à l'extérieur de l'arbre creux (402), vers la surface de réflexion disposée à l'intérieur du panier (401) de la centrifugeuse.

14. Dispositif selon la revendication 13, **caractérisé en ce que** la surface de réflexion est disposée sur la paroi du panier (401) de la centrifugeuse en regard de l'arbre creux.

15. Dispositif selon la revendication 13, **caractérisé en ce que** la surface de réflexion (410) est disposée sur la paroi du carter de la centrifugeuse en regard de l'arbre creux.
